Europäisches Patentamt

European Patent Office

Office européen des brevets

(19)

(11) Numéro de publication: **0 102 440**

**A1**

(12) **DEMANDE DE BREVET EUROPEEN**

(21) Numéro de dépôt: **82870045.0**

(22) Date de dépôt: **19.08.82**

(51) Int. Cl.³: **F 03 G 3/00**

(43) Date de publication de la demande:
14.03.84 Bulletin 84/11

(84) Etats contractants désignés:
AT BE CH DE FR GB IT LI LU NL SE

(71) Demandeur: vanden Auweele, Albert Joseph
Av. des Mille Mètres, 18
B-1150 Bruxelles(BE)

(72) Inventeur: vanden Auweele, Albert Joseph
Av. des Mille Mètres, 18
B-1150 Bruxelles(BE)

(54) Mécanisme de propulsion par suppression de l'amplitude négative d'un mouvement de va-et-vient.

(57) Mécanisme, qui d'un mouvement de va-et-vient d'une masse ne retient que les poussées positives et qui de ce fait transforme un mouvement rotatif en poussée nette et unidirectionnelle sans qu'il faille encore faire appel à la réaction du milieu ambiant.

La dite suppression de l'amplitude négative est obtenue en reliant une masse coulissante (6) à une bosse (4) coulissant sur le bras d'une manivelle (3) en même temps que la dite bosse (4) est reliée par une contrebielle (7) de longueur égale à la moitié de l'amplitude positive à un point fixe (8) du véhicule.

FIG.1

- 1 -

MECANISME DE PROPULSION PAR SUPPRESSION DE L'AMPLITUDE
NEGATIVE D'UN MOUVEMENT DE VA-ET-VIENT.

Le but du présent mécanisme est de fournir à un véhicule
ou masse déplaçable une propulsion ne s'appuyant plus du
tout sur le milieu ambiant.

Toute propulsion connue actuellement est basée sur la
réaction fournie par le milieu ou sur éjection de masse.

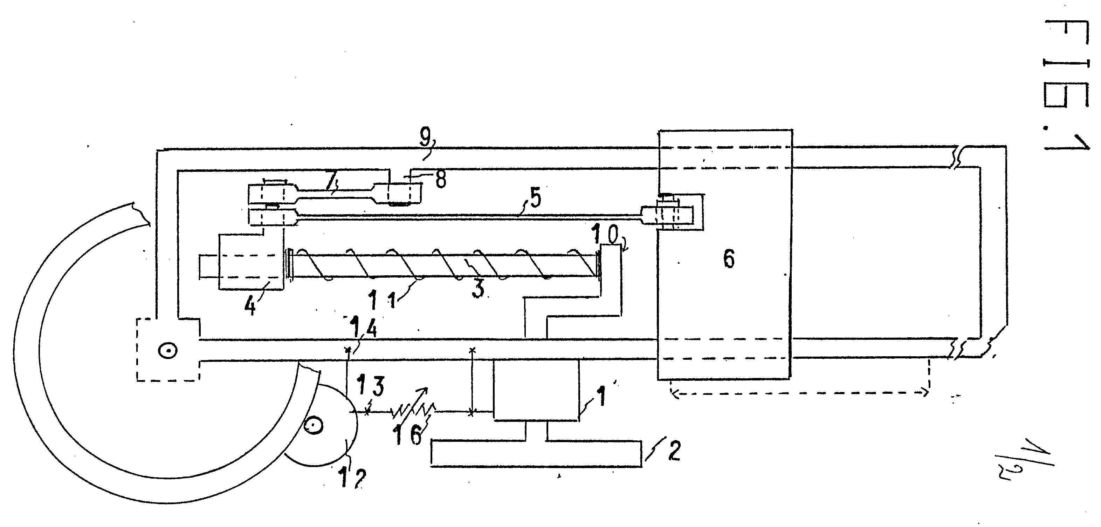

Comme éléments constitutifs le mécanisme prévoit (fig. 1)
qu'à l'interieur d'un véhicule une masse coulisse le long
de rails et des moyens de fonctionnement détaillés ci-après.
Un moteur (1) actionne un volant (2) à manivelle coudée (3)
sur le bras de laquelle coulisse une bosse (4), qui relie
par une bielle (5) la masse coulissante (6) en même temps
que la dite bosse relie avec une contrebielle (7) un pivot
fixé (8) sous le pont (9).
Entre la bosse (4) et un arrêt (10) à l'extrémité du bras
de la manivelle (3) est glissé un ressort compressible (11).
Le roues entrainent une dynamo (12) dont une borne (13) est
reliée à la masse (14) et l'autre (15) à travers une résistance réglable (16) à une des bornes du moteur, l'autre
borne du moteur étant également reliée à la masse, le sens
de la rotation n'ayant aucune importance dans le mécanisme.

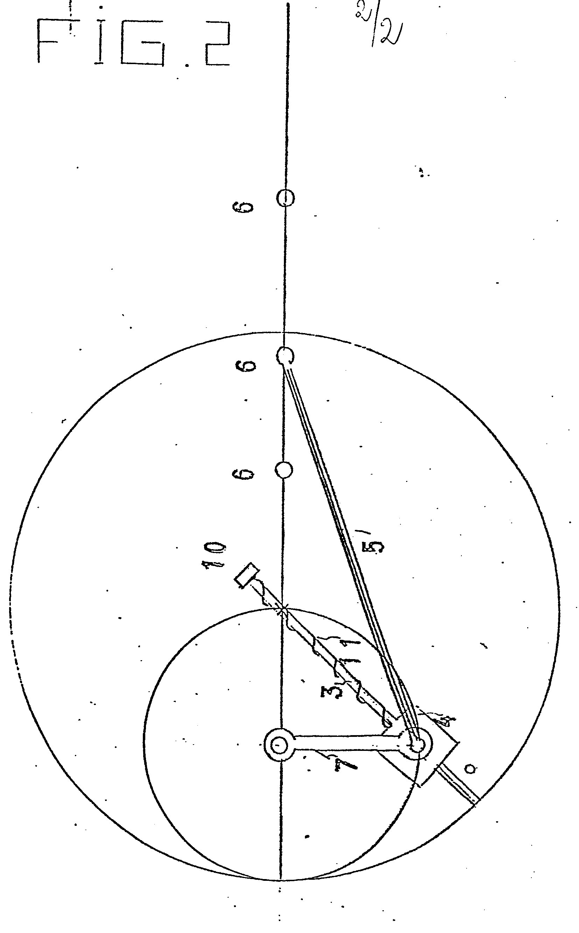

Fonctionnement : (fig. 2) : lorsque le moteur est mis en
en marche la masse coulissante (6) est animée d'un mouvement
de va-et-vient sur les rails par la manivelle (3) et la bielle (5) mais en même temps retenue par la contrebielle (7) de
sorte que la bosse coulissante (4) décrit un cercle, dont
le rayon est égal à la longueur de la contrebielle (7), qui

./..

- 2 -

est de la moitié du parcours va-et-vient de la masse coulissante (6), cercle qui par conséquent s'inscrit dans l'amplitude positive de la masse coulissante, dont le parcours est nécessairement le double de la longueur de la contrebielle : de ce fait aucune amplitude négatieve n'existe plus; en effet la bosse coulissante (4) pivote sur elle-même pendant un demi-tour de manivelle et le ressort (11) reste compressé avec le résultat que l'amplitude négative est nulle. Dès que la manivelle entre dans l'hémicycle +, le ressort se décharge.

La succession des impulsions positives provoque sur le véhicule une accélération continue unidirectionnelle, que la dynamo (13) réduit à une vitesse constante désirée tandis que le courant éléctrique produit est canalisé à travers le résistance réglable (16) vers le moteur et les accumulateurs.

- i -

REVENDICATIONS

1) Un véhicule constituant une première masse déplaçable (0), une deuxième masse (6) montée de manière coulissable sur la première masse, des moyens de fonctionnement comprenant un moteur (1) et des moyens de connexion entre les dites masses, couplés au dit moteur pour réciproquer la deuxième masse par rapport à la première en parcours en avant et en arrière et un moyen provoquant la suppression de l'amplitude négatieve tout en maintenant l'amplitude positieve.

2) Un véhicule, selon 1, dans lequel le mouvement du moteur est transmis par l'intermédiaire d'une manivelle coudée (3) et d'une bielle (5).

3) Un véhicule, selon 1 et 2, où la bielle (5), relie la masse coulissante (6) à une bosse (4) coulissant sur le bras de la manivelle.

4) Véhicule, selon 1, 2, 3,dans lequel la dite bosse (4) est reliée par une contrebielle (7) à un pivot fixe, situé à mi-chemin de l'amplitude positive sous un pont (9).

5) Véhicule, selon 1, 2, 3, 4, où la contrebielle (7) force la bosse coulissante (4) à parcourir un cercle autour du pivot fixe (9), cercle dont le diamètre est égal à l'amplitude positive de la masse coulissante(6) et de faire un demi-tour sur elle même pendant l'amplitude négative de la masse coulissante de sorte que l'amplitude négative est nulle.

6) Véhicule, selon 1 à 5, où un ressort se compresse pendant la descente de l'amplitude +, reste compressé, c'est-à-dire potentielle, pendant l'amplitude − et se décharge pendant la montée de l'amplitude +.

7) Véhicule, selon 6, propulsé unidirectionnellement et de manière accélérante par la succession des poussées positives périodiques.

8) Véhicule, selon 7, dans lequel une dynamo (12) entrainée par les roues réduit l'accélération à une vitesse constante tout en produisant une quantité d'electricité équivalente, utilisable à toute fin utile.

FIG.1

FIG.2

# 0102440

**Office européen des brevets**

## RAPPORT DE RECHERCHE EUROPEENNE

Numéro de la demande

EP 82 87 0045

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 079 684 (VANDEN AUWEELE) * Page 1, lignes 1-3, 15-35; page 2, lignes 1-6, 17-21; page 3, lignes 10-39; page 4, lignes 1,2 * | 1 | F 03 G 3/00 |
| Y | DE-A-2 852 678 (KLÖCKNER-HUMBOLDT-DEUTZ) * Page 4, dernier alinéa; page 5, alinéa 1; page 8, 2 dernières lignes; page 9, 2 premiers alinéas; figure 1 * | 1-5 | |
| A | FR-A-1 519 587 (GUINCHARD) * Page 1, colonne de gauche, lignes 1-18 et dernier alinéa; colonne de droite, partie de la deuxième version, planche 2 * | 1 | |

**DOMAINES TECHNIQUES RECHERCHES (Int. Cl. ³)**

F 03 G
F 16 H

Le présent rapport de recherche a été établi pour toutes les revendications

| Lieu de la recherche | Date d'achèvement de la recherche | Examinateur |
|---|---|---|
| LA HAYE | 13-04-1983 | JORIS J.C. |